# EUROPEAN PATENT APPLICATION

(11) **EP 2 628 764 A1**
(43) Date of publication of application: **21.08.2013**
(21) Application number: 12155366.3
(22) Date of filing: 14.02.2012
(51) Int. Cl.: C08J 5/04

(54) **Method for manufacturing a fibre reinforced composite**

(71) Applicant: Siemens Aktiengesellschaft, 80333 München (DE)
(72) Inventor: Grove-Nielsen, Erik, 7870 Roslev (DK)

(57) **Abstract**

A method for manufacturing a fibre reinforced composite using fibre material (1), comprising the step of connecting fibre material (1) together by means of a thread (2) comprising a material which at least partly degrades before finishing the manufacturing process.

## Description

### Field of the Invention

The present invention relates to a method for manufacturing a fibre reinforced composite, for example a wind turbine rotor blade.

### Background Art

Fibre reinforced plastic composites are used in a variety of technical products such as cars, aeroplanes, wind turbine blades, storage tanks etc. In many cases the fibre parts are placed in a mould. The mould is closed by a second mould part or a plastic foil is placed over the mould, and vacuum is applied to the fibre filled hollow structure. Hereafter the cavity is infused with a liquid resin, which later is cured to form a matrix material. The fibre parts are commonly supplied as fabrics of roving yarns, stitched together with thermoplastic sewing threads like thermoplastic polyester or PETP. Each roving yarn may hold 2 - 4000 single fibres. The stitching process mechanically stabilizes the roving yarns in a geometrically desirably pattern.

The tensioning of the stitching thread leads to local deformations of the unidirectional roving yarn bundles. In those areas the fibre content will reach an undesirably high value inside the roving yarn, and at the same time an area outside the roving yarn will be left without fibres. This area will have undesirably low fibre content or will consist of plastic resin alone. Areas that are not reinforced will be vulnerable to crack formation. It is also well known, that very high fibre content will impair the fatigue properties of a composite, as more fibres are in physical contact to neighbour fibres at extreme fibre contents. Thus high fibre content areas will have reduced fatigue properties. It is therefore desirable to obtain an even distribution of fibre content throughout the composite.

To avoid fatigue damage to composites made from fibre fabrics, the loading is normally reduced by designing a thicker laminate. This leads to parts that are heavier and more costly in materials and labour force.

### Description of the Invention

The objective of the present invention is to provide an advantageous method for manufacturing a fibre reinforced composite using fibre material, wherein the uniformity of the fibre distribution is improved. This objective is solved by a method for manufacturing the fibre reinforced composite as claimed in claim 1. The depending claims define further developments of the present invention.

The inventive method for manufacturing a fibre reinforced composite using fibre material comprises the step of connecting fibre material together by means of a thread. The thread comprises a material which at least partly degrades before finishing the manufacturing process of the fibre reinforced composite. Preferably the thread consists of a material which at least partly degrades before finishing the manufacturing process. Advantageously the used thread fully degrades before finishing the manufacturing process of the fibre reinforced composite.

For example, the fibre material can be connected by stitching or knitting the fibre material together. Preferably a stitching thread or knitting thread is used for connecting the fibre material. Roving yarn or fibre fabrics can be used as fibre material.

Advantageously a thread can be used which at least partly, preferably fully, degrades when certain production parameters in the production process are reached or changed. For example, a thread can be used which completely degrades or partly degrades by removing or loosing its tension. Moreover, liquid resin can be used for forming the matrix material of the composite. A thread can be used which comprises or consists of a material that dissolves in the liquid resin. Furthermore, a thread can be used which comprises or consists of a material that looses its tension when immersed in the resin.

In a further variant a thread can be used which comprises or consists of hollow fibres that decompose or break when the thread with the hollow fibres is exposed to a particular pressure, for example a pressure below atmospheric pressure or partial vacuum.

Advantageously a thread can be used which comprises or consists of material which melts or sublimes when exposed to temperatures in a range between 50°C to 100°C. For example, the thread may comprise material which begins to melt at a temperature between 50°C and 60°C or between 60°C and 70°C or between 70°C and 80°C or between 80°C and 90°C or between 90°C and 100°C.

A further variant is using a semi permeable thread. The semi permeable thread can break up or decompose when it is filled with resin. For example, the rovings of the fabrics can be held in place by semi permeable threads, which break up or decompose when they are filled by resin, for instance due to capillary forces or osmotic pressure difference.

Advantageously, semi permeable threads can be used which are spun in helix formed shape. In this case the intake of resin by capillary forces or osmotic pressure can change the shape of the thread in a way, which prolongs the fibre and hence reduces the tension of the thread.

When the used thread degrades, or at least the tension of the thread is removed, then the fibres in the single roving yarns or fibre fabrics can move freely in the consolidation process. This results in a material with uniform fibre distribution and avoids resin rich pockets.

The manufactured fibre reinforced composite can be a wind turbine rotor blade. Generally, vacuum assisted resin transfer moulding (VARTM) can be used for manufacturing the composite, for example the wind turbine rotor blade.

The present invention has the following advantages: the fibre distribution of the manufactured item will be uniform throughout the laminate. The laminate will not contain resin rich pockets. The laminate will not contain areas of excess fibre content. Furthermore, the fatigue properties of the laminate will be higher due to an even fibre distribution. The laminate will be more resistant to crack formation. A lighter laminate with improved fatigue resistance can be produced and the composite parts can be produced at a reduced cost.

Further features, properties and advantages of the present invention will become clear from the following description of an embodiment in conjunction with the accompanying drawings. The embodiment does not limit the scope of the present invention which is determined by the appended claims. All described features are advantageous as separate features or in any combination with each other.

### Short Description of the Figures

- Figure 1: schematically shows a cross section of a laminate stack in a cured composite part according to the state of the art.
- Figure 2: schematically shows a cross section of a laminate stack before consolidation and degradation of stitching thread according to the present invention.
- Figure 3: schematically shows a cross section of part of a laminate stack after consolidation and degradation of stitching threads according to the present invention.

### Description of Embodiments

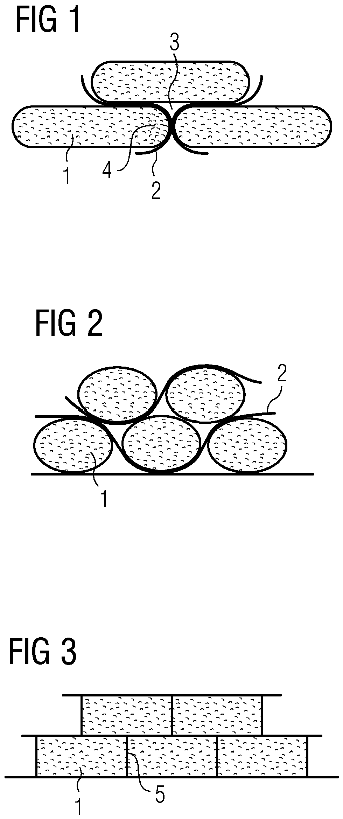

An embodiment of the present invention will now be described with reference to Figures 1 to 3. Figure 1 schematically shows part of a laminate stack in a cured composite part as obtained using state of the art techniques.

Figure 1 shows a sectional view perpendicular to the main fibre direction. A number of roving yarns 1 are placed side by side and onto each other. The roving yarns 1 are hold in place during the manufacturing process by means of stitching threads 2. The tensioning of the stitching threads 2 leads to local deformations of the unidirectional fibre roving yarn bundles 1. In those areas the fibre content will reach an undesirably high value inside the roving yarn. This is indicated by reference numeral 4, which designates a high fibre content area in a roving yarn due to constriction. At the same time an area outside the roving yarn is left without fibres. This area, which is indicated by reference numeral 3, has undesirably low fibre content and will consist of plastic resin alone and forms a so-called resin pocket with no fibre content.

Figure 2 schematically shows a cross section of part of a laminate stack before consolidation and degradation of the stitching thread according to the present invention. A number of roving yarns 1 are stitched together by means of a stitching thread 2 and are for example placed in a mould for applying vacuum assisted resin transfer moulding.

The stitching thread or knitting thread 2 at least partly degrades, preferably fully degrades, when certain production parameters in the production process are reached or change. For example, the thread 2 may loose or remove its tension due to capillary forces or osmotic pressure caused by infused resin. Advantageously the thread may be a semi permeable thread which is spun in a helix formed shape. Moreover, the used thread 2 may be a semi permeable thread, which breaks up or decomposes when filled with resin.

A further variant is to use a thread 2 which partly or completely dissolves in liquid resin. Furthermore, the thread 2 may consist of hollow fibres that decompose or break up when exposed to a particular pressure. The particular pressure may be the pressure which is reached when applying vacuum in a vacuum assisted resin transfer moulding process when sucking in resin and distributing resin in the fibre material.

In a further variant or additionally the used thread 2 comprises or consists of material which melts or sublimes when exposed to temperatures in a range between 50°C and 100°C. In this case the temperature of the laminate stack can be increased to a temperature between 50°C and 100°C before or when infusing resin into the structure.

Figure 3 schematically shows a cross section of the laminate stack after consolidation and degradation of the stitching threads 2. The roving yarn 1 shows a uniform fibre distribution throughout the laminate. The stitching thread 2 is at least partly decomposed and thus does not cause resin rich pockets or areas with high fibre content as shown in Figure 1. The space between the roving yarns is indicated by reference numeral 5 in Figure 2. These pockets are now collapsed as shown in Figure 3.

Preferably the described method can be used for manufacturing a fibre reinforced composite such as a wind turbine rotor blade. By using the described method the mechanical properties of the obtained composite are improved, especially by avoiding resin rich pockets and areas of excess fibre content. Due to the obtained even fibre distribution the fatigue properties of the laminate are increased. Furthermore, the risk of crack formation is reduced and a lighter laminate with improved fatigue resistance is obtained.

## Claims

1. A method for manufacturing a fibre reinforced composite using fibre material (1), comprising the step of connecting fibre material (1) together by means of a thread (2) comprising a material which at least partly degrades before finishing the manufacturing process.

2. The method as claimed in claim 1,
**characterised in**
connecting the fibre material (1) together by stitching or knitting the fibre material (1).

3. The method as claimed in claim 1 or claim 2, **characterised in**
using roving yarn or fibre fabrics as fibre material (1).

4. The method as claimed in any of the claims 1 to 3, **characterised in**
using a thread (2) which at least partly degrades when certain production parameters in the production process are reached or change.

5. The method as claimed in any of the claims 1 to 4, **characterised in**
using a thread (2) which completely degrades or partly degrades by removing or loosing its tension.

6. The method as claimed in any of the claims 1 to 4, **characterised in**
using liquid resin for forming the matrix material of the composite and using a thread (2) comprising or consisting of a material that dissolves in the liquid resin.

7. The method as claimed in any of the claims 1 to 6, **characterised in**
using liquid resin for forming the matrix material of the composite and using a thread (2) comprising or consisting of a material that looses its tension when immersed in the resin.

8. The method as claimed in any of the claims 1 to 7, **characterised in**
using a thread (2) comprising or consisting of hollow fibres that decompose or break when it is exposed to a particular pressure.

9. The method as claimed in any of the claims 1 to 8, **characterised in**
using a thread (2) comprising or consisting of material which melts or sublimes when exposed to temperatures in a range between 50°C to 100°C.

10. The method as claimed in any of the claims 1 to 9, **characterised in**
using a semi permeable thread (2).

11. The method as claimed in claim 10,
**characterised in**
using a semi permeable thread (2) which breaks up or decomposes when it is filled with resin.

12. The method as claimed in claim 10 or claim 11, **characterised in**
using semi permeable threads (2) which are spun in helix formed shape.

13. The method as claimed in any of the claims 1 to 12, **characterised in that**
the manufactured a fibre reinforced composite is a wind turbine rotor blade.

14. The method as claimed in any of the claims 1 to 13, **characterised in**
using Vacuum Assisted Resin Transfer Moulding.
